(19) Europäisches Patentamt
European Patent Office
Office européen des brevets

(11) **EP 4 159 696 A1**

(12) **EUROPEAN PATENT APPLICATION**
published in accordance with Art. 153(4) EPC

(43) Date of publication:
**05.04.2023 Bulletin 2023/14**

(21) Application number: **21811829.7**

(22) Date of filing: **14.04.2021**

(51) International Patent Classification (IPC):
*C03C 3/095* (2006.01)   *C03C 3/093* (2006.01)

(86) International application number:
**PCT/CN2021/087203**

(87) International publication number:
**WO 2021/238476 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.05.2020 CN 202010460020**

(71) Applicant: **CDGM Glass Co. Ltd.**
**Chengdu, Sichuan 610100 (CN)**

(72) Inventors:
• **MAO, Lulu**
**Chengdu, Sichuan 610100 (CN)**
• **HAO, Liangzhen**
**Chengdu, Sichuan 610100 (CN)**
• **KUANG, Bo**
**Chengdu, Sichuan 610100 (CN)**

(74) Representative: **Bandpay & Greuter**
**30, rue Notre-Dame des Victoires**
**75002 Paris (FR)**

(54) **GLASS MATERIAL**

(57) The invention provides a glass material, comprising the following components by weight percentage: 50-70% of $SiO_2$; 3-15% of $B_2O_3$; 0.5-10% of $TiO_2$; 1-12% of ZnO; 0.5-10% of $Al_2O_3$; 5-22% of $Na_2O+K_2O$, wherein $B_2O_3/SiO_2$ is 0.06-0.26, and $(TiO_2+ZnO)/Al_2O_3$ is 0.5-8.0. Through rational component design, the glass material of the present invention features high light transmittance and excellent chemical stability, so as to be able to be applied in the field of photosensitive device packaging.

**Description**

Technical Field

The present invention relates to a glass material, in particular to a glass material suitable for the field of photosensitive device packaging.

Background

In general, photoelectric converters such as COMS and CCD apply glass materials for windows, so that the windows can play the role of light transmission and protection of photoelectric conversion chip. The earlier photosensitive devices such as COMS and CCD are usually placed in the camera with comfortable service environment, thus no high requirements are posed for chemical stability (acid resistance, water resistance, alkali resistance, etc.), weather resistance and temperature shock resistance of protective window of the photosensitive device. Along with the development of on-board security, deep space and ocean exploration and machine vision in recent years, photosensitive devices require higher reliability under very harsh conditions. For example, the photosensitive devices used in high-temperature fire need to withstand extreme temperature environments of 100-200°C or even higher; the photosensitive devices used for observation in marine environment need to be able to withstand long-term alkaline or acid erosion; the photosensitive devices used for observation of chemistry (chemical) experiment need to be able to withstand strong acid and alkali corrosion; the photosensitive devices used for on-board use and security need to be exposed to outdoor environment for a long time. For photosensitive devices such as COMS, the key component of the photosensitive chip is silicon single crystal, and the packaging housing is mainly made of ceramic material. The ceramic material enjoys excellent chemical stability and impact resistance performance, but its weakness lies in the optical opacity, thereby requiring brittle glass material as the light transmission window. In terms of chemical stability and thermal shock resistance, there is a massive gap between glass material and ceramic material. Hence, the best way to enhance the reliability of photosensitive devices in harsh external environment is to improve the chemical stability and temperature impact resistance of the window glass material.

As the window of the photosensitive chip, the glass material requires higher transmittance in the range of 360nm to 2000nm, in order to meet the needs of UV - visible light - near-infrared light sensitivity in different wavebands. The transmittance of glass material is usually subject to gradual increase from 360nm to 2000nm, so the lowest transmittance of glass can be characterized by the internal transmittance at 360nm ($\tau$360nm). When $\tau_{360nm}$ is above 78%, it represents that the packaged glass can meet the transmittance requirements of the above waveband. Since the glass for packaging needs to avoid reflection loss as much as possible, if the refractive index exceeds 1.60, the glass reflection loss will increase. Although the reflection loss can be reduced by coating anti-reflection film, it will result in cost increase and stray light interference problems.

Summary

The technical problem to be solved by the present invention is to provide a glass material with high light transmittance and excellent chemical stability.

To solve the technical problem, the technical scheme of the present invention provides:

(1) A glass material, comprising the following components by weight percentage: 50-70% of $SiO_2$; 3-15% of $B_2O_3$; 0.5-10% of $TiO_2$; 1-12% of ZnO; 0.5-10% of $Al_2O_3$; 5-22% of $Na_2O+K_2O$, wherein $B_2O_3/SiO_2$ is 0.06-0.26, and $(TiO_2+ZnO)/Al_2O_3$ is 0.5-8.0.

(2) The glass material according to (1), further comprising the following components by weight percentage: 0-10% of MgO+CaO+SrO+BaO; and/or 0-5% of $Li_2O$; and/or 0-5% of $P_2O_5$; and/or 0-5% of $ZrO_2$; and/or 0-5% of $La_2O_3$; and/or 0-5% of $Y_2O_3$; and/or 0-5% of $Gd_2O_3$; and/or 0-5% of $Nb_2O_5$; and/or 0-5% of $WO_3$; and/or 0-1% of clarifying agent.

(3) A glass material, consisting of the following components by weight percentage: 50-70% of $SiO_2$; 3-15% of $B_2O_3$; 0.5-10% of $TiO_2$; 1-12% of ZnO; 0.5-10% of $Al_2O_3$; 5-22% of $Na_2O+K_2O$; 0-10% of MgO+CaO+SrO+BaO; 0-5% of $Li_2O$; 0-5%of$P_2O_5$; 0-5% of $ZrO_2$; 0-5% of $La_2O_3$; 0-5% of $Y_2O_3$; 0-5% of $Gd_2O_3$; 0-5% of $Nb_2O_5$; 0-5% of $WO_3$; 0-1% of clarifying agent, wherein $B_2O_3/SiO_2$ is 0.06-0.26, and $(TiO_2+ZnO)/Al_2O_3$ is 0.5-8.0.

(4) The glass material according to any of (1)-(3), comprising the components by weight percentage, wherein $B_2O_3/SiO_2$ is 0.08-0.2; and/or $(TiO_2+ZnO)/Al_2O_3$ is 0.7-7.0; and/or $(SiO_2+TiO_2)/(Na_2O+ZnO)$ is 3.0-12.0; and/or $ZnO/B_2O_3$ is 0.2-1.8; and/or $(Na_2O+K_2O)/Al_2O_3$ is 0.8-8.0; and/or $(Na_2O+K_2O)/(B_2O_3+ZnO)$ is 0.2-2.5; and/or $(B_2O_3+K_2O)/Al_2O_3$ is 1.0-10.0.

(5) The glass material according to any of (1)-(3), comprising the components by weight percentage, wherein (MgO+CaO+SrO+BaO)/ZnO is below 1.0; and/or (MgO+CaO+SrO+BaO)/Al$_2$O$_3$ is below 1.0; and/or (MgO+CaO+SrO+BaO)/(Na$_2$O+K$_2$O) is below 1.0.

(6) The glass material according to any of (1)-(3), comprising the following components by weight percentage: 55-68% of SiO$_2$; and/or more than 5% but less than or equal to 13% of B$_2$O$_3$; and/or 1.5-8% of TiO$_2$; and/or 2-10% of ZnO; and/or 1-8% of Al$_2$O$_3$; and/or 6-20% of Na$_2$O+K$_2$O; and/or 0-5% of MgO+CaO+SrO+BaO; and/or 0-3% of Li$_2$O; and/or 0-3% of P$_2$O$_5$; and/or 0-3% of ZrO$_2$; and/or 0-3% of La$_2$O$_3$; and/or 0-3% of Y$_2$O$_3$; and/or 0-3% of Gd$_2$O$_3$; and/or 0-3% of Nb$_2$O$_5$; and/or 0-3% of WO$_3$; and/or 0-0.5% of clarifying agent.

(7) The glass material according to any of (1)-(3), comprising the components by weight percentage, wherein B$_2$O$_3$/SiO$_2$ is 0.1-0.18; and/or (TiO$_2$+ZnO)/Al$_2$O$_3$ is 1.0-5.0; and/or (SiO$_2$+TiO$_2$)/(Na$_2$O+ZnO) is 3.0-10.0; and/or ZnO/B$_2$O$_3$ is 0.3-1.0; and/or (Na$_2$O+K$_2$O)/Al$_2$O$_3$ is 1.0-6.0; and/or (Na$_2$O+K$_2$O)/(B$_2$O$_3$+ZnO) is 0.3-2.0; and/or (B$_2$O$_3$+K$_2$O)/Al$_2$O$_3$ is 1.5-8.0.

(8) The glass material according to any of (1)-(3), comprising the components by weight percentage, wherein (MgO+CaO+SrO+BaO)/ZnO is below 0.5; and/or (MgO+CaO+SrO+BaO)/Al$_2$O$_3$ is below 0.5; and/or (MgO+CaO+SrO+BaO)/(Na$_2$O+K$_2$O) is below 0.5.

(9) The glass material according to any of (1)-(3), comprising the following components by weight percentage: 60-68% of SiO$_2$; and/or 6-12% of B$_2$O$_3$; and/or 2-7% of TiO$_2$; and/or 3-8% of ZnO; and/or 2-7% of Al$_2$O$_3$; and/or 8-18% of Na$_2$O+K$_2$O; and/or 0-1% of La$_2$O$_3$; and/or 0-1% of Y$_2$O$_3$; and/or 0-1% of Gd$_2$O$_3$; and/or 0-1% of Nb$_2$O$_5$; and/or 0-1% of WO$_3$.

(10) The glass material according to any of (1)-(3), comprising the components by weight percentage, wherein (SiO$_2$+TiO$_2$)/(Na$_2$O+ZnO) is 4.0-8.0; and/or ZnO/B$_2$O$_3$ is 0.4-0.8; and/or (Na$_2$O+K$_2$O)/Al$_2$O$_3$ is 1.5-5.0; and/or (Na$_2$O+K$_2$O)/(B$_2$O$_3$+ZnO) is 0.5-1.5; and/or (B$_2$O$_3$+K$_2$O)/Al$_2$O$_3$ is 2.0-6.0.

(11) The glass material according to any of (1)-(3), comprising the components by weight percentage, wherein (MgO+CaO+SrO+BaO)/ZnO is below 0.2; and/or (MgO+CaO+SrO+BaO)/Al$_2$O$_3$ is below 0.2; and/or (MgO+CaO+SrO+BaO)/(Na$_2$O+K$_2$O) is below 0.2.

(12) The glass material according to any of (1)-(3), comprising the following components by weight percentage: 2-12% of Na$_2$O, preferably 3-10% of Na$_2$O, more preferably 4-9% of Na$_2$O; and/or 2-12% of K$_2$O, preferably 3-10% of K$_2$O, more preferably 4-9% of K$_2$O; and/or 0-5% of MgO, preferably 0-3% of MgO, more preferably 0-2% of MgO; and/or 0-5% of CaO, preferably 0-3% of CaO, more preferably 0-2% of CaO; and/or 0-5% of SrO, preferably 0-3% of SrO, more preferably 0-2% of SrO; and/or 0-5% of BaO, preferably 0-3% of BaO, more preferably 0-2% of BaO.

(13) The glass material according to any of (1)-(3), comprising the components by weight percentage, wherein the total content of La$_2$O$_3$, Y$_2$O$_3$, Gd$_2$O$_3$, Nb$_2$O$_5$ and WO$_3$ is below 5%, preferably below 3%, more preferably below 1%.

(14) The glass material according to any of (1)-(3), wherein the components thereof do not contain F; and/or do not contain Ta$_2$O$_3$; and/or do not contain Li$_2$O; and/or do not contain P$_2$O$_5$; and/or do not contain ZrO$_2$.

(15) The glass material according to any of (1)-(3), wherein the refractive index of the glass material is 1.48-1.56, preferably 1.50-1.55, more preferably 1.51-1.54; and/or Abbe number is 50-58, preferably 51-57, more preferably 53-56; and/or thermal expansion coefficient $\alpha_{20-300°C}$ is $60\times10^{-7}$/K-$90\times10^{-7}$/K, preferably $65\times10^{-7}$/K-$85\times10^{-7}$/K, more preferably $68\times10^{-7}$/K-$80\times10^{-7}$/K; and/or Young's modulus is above $6000\times10^{7}$Pa, preferably $6500\times10^{7}$Pa-$8500\times10^{7}$Pa, more preferably $7000\times10^{7}$Pa-$8000\times10^{7}$Pa; and/or transition temperature is 500°C-610°C, preferably 520°C-600°C, more preferably 530°C-580°C; and/or bubble degree is above Grade A, preferably above Grade A$_0$, more preferably Grade A$_{00}$; and/or stripe is above Grade C, preferably above Grade B.

(16) The glass material according to any of (1)-(3), wherein acid resistance stability of the glass material is above Class 2, preferably Class 1; and/or water resistance stability is above Class 2, preferably Class 1; and/or for alkali resistance stability, the weight loss of glass sample is less than 9mg after the measurement in accordance with test conditions and requirements of ISO 10629, preferably less than 7mg, more preferably less than 5mg; and/or light transmittance $\tau_{360nm}$ is above 78%, preferably above 82%, more preferably above 85%.

(17) Application of the glass material according to any of (1)-(16) in the field of packaging.

(18) A glass element, made of the glass material according to any of (1)-(16).

(19) A device, comprising the glass material according to any of (1)-(16), or comprising the glass element according to (18).

The beneficial effects of the present invention are as follows: Through rational component design, the glass material of the present invention features high light transmittance and excellent chemical stability, so as to be able to be applied in the field of photosensitive device packaging.

Detailed Description

The implementations of the glass material of the present invention will be described in detail below, but the present invention is not limited to the following implementations. Appropriate changes may be made within the scope of the purpose of the present invention for implementation. In addition, the repeated descriptions will not limit the aim of the invention although with appropriate omissions. In the following, the glass material of the present invention is sometimes referred to as glass.

[Glass material]

In the following paragraphs, the range of components of the glass material provided by the present invention will be described. If not specified herein, the content of each component and the total content are expressed in weight percentage relative to the total glass materials converted into oxide composition. "Converted into oxide composition" therein refers to that the total weight of this oxide is taken as 100% when the oxide, compound salt and hydroxide, used as raw materials for the composition of glass material of the present invention, are decomposed and transformed into oxides during melting.

Unless otherwise noted in specific circumstances, the numerical range listed herein includes upper and lower limits, and the words "above" and "below" include the endpoint values as well as all integers and fractions within the range, but not limited to the specific values listed when the range is limited. "And/or" mentioned herein is inclusive. For example, "A and/or B" refers to only A, or only B, or both A and B.

<Necessary components and optional components>

$SiO_2$ serves as a key component of the present glass. In the glass of the present invention, an appropriate amount of $SiO_2$ can ensure higher water resistance and acid resistance of the glass, and meanwhile achieve high light transmittance. If the content of $SiO_2$ is less than 50%, the water resistance, acid resistance and UV light transmittance of the glass are lower than the design requirements. If the content of $SiO_2$ is higher than 70%, the refractive index of the glass fails to meet the design requirements. The melting temperature of the glass will rise sharply, thus it is not easy to obtain high-quality glass during production, and the thermal expansion coefficient of the glass will decrease. Therefore, the content of $SiO_2$ in the present invention is confined to 50-70%, preferably 55-68%, and more preferably 60-68%.

Adding an appropriate amount of $B_2O_3$ into the glass can the transform the glass structure to be dense, improve the refractive index of the glass, and meanwhile achieve higher water and acid resistance. If the content thereof is less than 3%, the above effect is not obvious. If the content of $B_2O_3$ is higher than 15%, the water and acid resistance of the glass will decrease. Therefore, the content of $B_2O_3$ is confined to 3-15%, preferably more than 5% but less than or equal to 13%, more preferably 6-12%.

In the present invention, the value of $B_2O_3/SiO_2$ affects the difficulty of glass production. When $B_2O_3/SiO_2$ is less than 0.06, the melting temperature of the glass increases to aggravate the erosion of refractory materials, and it is easy to introduce more colored impurities and inclusions into the glass, resulting in that the transmittance of the glass fails to meet the design requirements. Meanwhile, the probability of defect increases within the product. When $B_2O_3/SiO_2$ is more than 0.26, the melting temperature drop is not obvious, the erosion of $B_2O_3$ on refractory materials increases, and it is easy to introduce more colored impurities and inclusions into the glass, resulting in that the short-wave transmittance of the glass fails to meet the design requirements. Meanwhile, the probability of defect increases on the product surface. Therefore, the value of $B_2O_3/SiO_2$ in the present invention is 0.06-0.26, preferably 0.08-0.2, more preferably 0.1-0.18.

Adding an appropriate amount of $Al_2O_3$ into the glass can improve the water and acid resistance of the glass, and meanwhile lower the thermal expansion coefficient of the glass, especially in the presence of alkali metal oxides. If the content of $Al_2O_3$ is higher than 10%, the thermal expansion coefficient of the glass decreases rapidly, failing to meet the design requirements. Therefore, the content of $Al_2O_3$ is confined to 0.5-10%, preferably 1-8%, more preferably 2-7%.

Adding an appropriate amount of $TiO_2$ into the glass can enhance the refractive index of the glass, improve the water, acid and alkali resistance of the glass, and meanwhile reduce the thermal expansion coefficient of the glass and improve the thermal shock resistance of the glass. If the content of $TiO_2$ is less than 0.5%, the above effect is not obvious; if the content of $TiO_2$ exceeds 10%, the Abbe number of the glass is lower than the expected design value, and the short-wave transmittance decreases rapidly, especially under unstable melting atmosphere. More importantly, the high content of $TiO_2$ leads to a rapid rise in the refractive index of the glass, and the reflection loss of the short-wave wavelength increases in case of no anti-reflection film, resulting in further reduction of short-wave transmittance. Meanwhile, the thermal expansion coefficient of the glass reduces, failing to meet the design requirements. Therefore, the content of $TiO_2$ in the present invention is confined to 0.5-10%, preferably 1.5-8%. In some implementations, taking into account the refractive index and Abbe number of the glass as well as the difficulty of atmosphere control, the content of $TiO_2$ is more preferably 2-7%.

Adding ZnO, with large field strength in divalent metal oxides, into the glass can improve the acid, water and alkali resistance of the glass, enhance the refractive index of the glass, and meanwhile reduce the thermal expansion coefficient of the glass, especially in glass systems containing alkali metals. If the content of ZnO is less than 1%, the above effect is not obvious. If the content of ZnO exceeds 12%, the transition temperature of the glass decreases rapidly, so that the glass is easy to soften and deform under high-temperature working environment, exerting a fatal effect on glass devices that need to work at high temperature. In addition, if the content thereof exceeds 12%, the dispersion of the glass rises rapidly, and the Abbe number fails to meet the design requirements. Therefore, the content of ZnO is confined to 1-12%, preferably 2-10%, more preferably 3-8%.

In the present invention, if the value of $(TiO_2+ZnO)/Al_2O_3$ is more than 8.0, the UV transmittance of the glass decreases and the devitrification tendency increases; if the value of $(TiO_2+ZnO)/Al_2O_3$ is less than 0.5, the melting of glass reduces, the difficulty of bubble ejection increases and the inner quality becomes worse. Therefore, the value of $(TiO_2+ZnO)/Al_2O_3$ is 0.5-8.0, the value of $(TiO_2+ZnO)/Al_2O_3$ is preferably 0.7-7.0, and the value of $(TiO_2+ZnO)/Al_2O_3$ is more preferably 1.0-5.0.

It is found through large number of experimental studies, by the inventor, that when $B_2O_3$ is contained in the glass, the existence of ZnO further reduces the melting temperature of the glass, and it is easier to obtain high-quality products; if the value of $ZnO/B_2O_3$ is less than 0.2, the above effect is not obvious; if $ZnO/B_2O_3$ is higher than 1.8, the transition temperature of the glass decreases rapidly, and the heat resistance fails to meet the design requirements. On the other hand, when the value of $ZnO/B_2O_3$ is 0.2-1.8, the water, acid and alkali resistance of the glass is better than that when $B_2O$ is added alone. Therefore, the value of $ZnO/B_2O_3$ in the present invention is preferably 0.2-1.8, more preferably 0.3-1.0, and further preferably 0.4-0.8.

Adding MgO, CaO, SrO and BaO, all belonging to alkaline-earth metal oxide, into the glass can enhance the refractive index and transition temperature of the glass, and adjust the stability and thermal expansion coefficient of the glass. However, the addition of alkaline-earth metal oxide leads to a rapid rise in Young's modulus of the glass. When the thermal expansion coefficient of the glass material is consistent, the glass with low Young's modulus has better thermal shock resistance. Therefore, considering the above factors, the total addition amount of alkaline-earth metal oxides MgO+CaO+SrO+BaO is preferably below 10%, more preferably below 5%. In some implementations, if the stability, thermal expansion coefficient and transition temperature of the glass meet the design requirements, it is further preferred not to add alkaline-earth metal oxide.

In some implementations of the present invention, the devitrification resistance and chemical stability of the glass can be improved by making the ratio of alkaline-earth metal oxide to $Al_2O_3$ $((MgO+CaO+SrO+BaO)/Al_2O_3)$ to be below 1.0. $(MgO+CaO+SrO+BaO)/Al_2O_3$ is preferably below 0.5, and $(MgO+CaO+SrO+BaO)/Al_2O_3$ is more preferably below 0.2.

In some packaging applications, the matching of optical system can be achieved with higher refractive index or higher transition temperature, which requires the addition of a small amount of alkaline-earth metal oxide. When alkaline-earth metal oxide is added, in order to avoid the rapid decline of water, acid and alkali resistance of the glass, it can be considered to add MgO, CaO, SrO and BaO separately in sequence or in combined form. If the individual content of alkaline-earth metal oxides such as MgO, CaO, SrO and BaO exceeds 5%, the devitrification resistance performance of the glass will decline rapidly, so that it is not easy to obtain large-caliber high-quality products. Therefore, the content of MgO, CaO, SrO and BaO is confined to be below 5% respectively, preferably below 3%, more preferably below 2%.

It is found through large number of experimental studies, by the inventor, that if a certain amount of alkaline-earth metal oxide exists in the glass, the content of ZnO can be considered to be adjusted to reduce the loss of glass chemical stability and thermal shock resistance. In some implementations, when the value of $(MgO+CaO+SrO+BaO)/ZnO$ is below 1.0, preferably below 0.5, more preferably below 0.2, it is easier to obtain the glass with higher refractive index as well as chemical stability, thermal expansion coefficient and thermal shock resistance that meet the design requirements of the present invention.

$Li_2O$, $Na_2O$ and $K_2O$ belong to alkali metal oxides. In the glass of the present invention, the content thereof is closely related to the thermal expansion coefficient, chemical stability and internal quality of the glass.

Adding $Li_2O$ into the glass can lower the glass melting temperature and enhance the bubble degree of the glass. At the same time, compared with the other two alkali metal oxides, it brings the minimum loss to chemical stability of the glass. However, if the content of $Li_2O$ exceeds 5%, the curing speed of the glass is slow during the forming process (namely, the process of glass liquid from liquid cooling to solid state), which is unfavorable for the production of large-size high-quality products (in case of manufacturing of products with width or diameter of more than 340mm and thickness of more than 40mm, it is easy to have unqualified stripe degree and internal devitrification). On the other hand, it will also lead to a transition temperature drop of the glass, and the heat resistance fails to meet the design requirements. Therefore, the content of $Li_2O$ is confined to be below 5%, preferably below 3%, more preferably 0%.

In the present invention, if the total content of $Na_2O$ and $K_2O$ ($Na_2O+K_2O$) exceeds 22%, the Abbe number of the glass is lower than the design requirements, and the thermal expansion coefficient of the glass exceeds the design requirements. Meanwhile, the dielectric constant of the glass rises rapidly, leading to a rapid decline in the insulation performance of the glass, which is unfavorable for certain applications requiring insulation. If $Na_2O+K_2O$ is less than 5%, the thermal expansion coefficient of the glass fails to meet the design requirements, and meanwhile, the coloring ability of the variable components in the glass will be enhanced, and the short-wave transmittance of the glass fails to meet the design requirements. Therefore, the total content of $Na_2O$ and $K_2O$ ($Na_2O+K_2O$) is 5-22%, preferably 6-20%, more preferably 8-18%.

Adding $Na_2O$ into the glass can significantly increase the thermal expansion coefficient of the glass, and meanwhile reduce the high-temperature viscosity of the glass, so that it is easier to obtain glass products, with a width of more than 330mm, that can be processed into 12-inch packaging wafers. However, if the content of $Na_2O$ exceeds 12%, the refractive index of the glass decreases and the chemical stability of the glass decreases rapidly, which cannot meet the design requirements. If the content of $Na_2O$ is less than 2%, the thermal expansion coefficient of the glass fails to meet the design requirements, and meanwhile the chemical stability deteriorates seriously. Therefore, the content of $Na_2O$ is confined to 2-12%, preferably 3-10%, more preferably 4-9%.

Adding an appropriate amount of $K_2O$ into the glass can enhance the thermal expansion coefficient of the glass, reduce the high-temperature viscosity of the glass and enhance the bubble degree of the glass, especially under the coexistence with $Na_2O$. Adding an appropriate amount of $K_2O$ into the glass will not obviously damage the chemical stability of the glass. However, if the content thereof exceeds 12%, the water, acid and alkali resistance of the glass deteriorates. If the content of $K_2O$ is less than 2%, the effect of increasing thermal expansion coefficient and reducing high-temperature viscosity is not obvious. Therefore, the content of $K_2O$ is confined to 2-12%, preferably 3-10%, more preferably 4-9%.

In some implementations of the present invention, if the value of $(B_2O_3+K_2O)/Al_2O_3$ is more than 10.0, the alkali resistance of the glass decreases and the thermal expansion coefficient increases; if the value of $(B_2O_3+K_2O)/Al_2O_3$ is less than 1.0, the melting of the glass reduces and the transition temperature increases. Therefore, the value of $(B_2O_3+K_2O)/Al_2O_3$ is preferably 1.0-10.0, the value of $(B_2O_3+K_2O)/Al_2O_3$ is more preferably 1.5-8.0, and the value of $(B_2O_3+K_2O)/Al_2O_3$ is further preferably 2.0-6.0.

In some implementations of the present invention, if the value of $(Na_2O+K_2O)/(B_2O_3+ZnO)$ is less than 0.2, the free oxygen is insufficient in the glass system, resulting in a decrease in the probability of components such as $B_2O_3$ and ZnO entering the glass network and a sharp decrease in chemical stability, and meanwhile, the expansion coefficient of the glass is reduced, which cannot meet the design requirements. If the value of $(Na_2O+K_2O)/(B_2O_3+ZnO)$ is more than 2.5, the free oxygen in the glass system is excessive, leading to a sharp decline in the chemical stability of the glass and glass expansion coefficient beyond the design requirements. Therefore, when the value of $(Na_2O+K_2O)/(B_2O_3+ZnO)$ is 0.2-2.5, preferably 0.3-2.0, more preferably 0.5-1.5, the chemical stability and thermal expansion coefficient of the glass are the most balanced.

It is generally believed in the prior art that the addition of alkaline-earth metal oxides such as MgO, CaO, SrO and BaO into the glass is more favorable to the improvement of chemical stability than alkali metal oxides such as $Li_2O$, $Na_2O$ and $K_2O$. The inventor found through experiments that in the glass of the present system, because the ability of alkaline-earth metal oxides to provide free oxygen is weaker than that of alkali metal oxides, when the value of $(MgO+CaO+SrO+BaO)/(Na_2O+K_2O)$ is more than 1.0, the internal network of the glass is severely broken, thus reducing the chemical stability of the glass, especially when soaking in strong alkaline solution; when the value of $(MgO+CaO+SrO+BaO)/(Na_2O+K_2O)$ is more than 1.0, the alkaline-earth metal ions are more easily eroded and precipitated, which is disastrous for some process during semiconductor manufacturing. Therefore, the value of $(MgO+CaO+SrO+BaO)/(Na_2O+K_2O)$ is below 1.0, preferably below 0.5, more preferably below 0.2.

In the present invention, in order to obtain a suitable thermal expansion coefficient, it is necessary to add $Na_2O$ and $K_2O$ into the glass, but it will result in a decrease in the chemical stability of the glass. According to the researches by the inventor, when $Al_2O_3$ exists in the glass, the type and relative content of the alkali metal oxide will change the microstructure of the glass and exert a greater impact on the chemical stability of the glass. In some implementations, when the value of $(Na_2O+K_2O)/Al_2O_3$ is 0.8-8.0, preferably 1.0-6.0, more preferably 1.5-5.0, it can improve the chemical stability of the glass.

In some implementations of the present invention, when the value of $(SiO_2+TiO_2)/(Na_2O+ZnO)$ is more than 12.0, the glass becomes difficult to melt and clarify, and it is difficult to remove bubbles and inclusions inside the glass. Thus, it is difficult to obtain the glass with bubble degree above Grade $A_0$, and inner stripes of the glass are serious. If the value of $(SiO_2+TiO_2)/(Na_2O+ZnO)$ is less than 3.0, the thermal expansion coefficient of the glass decreases rapidly, which is beyond the design requirements. Therefore, the value of $(SiO_2+TiO_2)/(Na_2O+ZnO)$ is preferably controlled to be 3.0-12.0, more preferably 3.0-10.0, further preferably 4.0-8.0.

Adding an appropriate amount of $ZrO_2$ into the glass can improve the chemical stability and thermal shock resistance of the glass, and meanwhile enhance the refractive index of the glass. However, it is characterized by an obvious increase in the melting temperature of the glass. If the content thereof is higher than 5%, the glass is prone to inclusion defect. Therefore, the content of $ZrO_2$ is confined to be below 5%, preferably below 3%. In some implementations, when the chemical stability and strength of the glass are abundant, $ZrO_2$ is preferably to be not added.

Adding an appropriate amount of $P_2O_5$ into the glass can increase the strength of the glass, especially when chemical strengthening is required. However, if the content thereof exceeds 5%, the differential phase is easy to produce inside the glass, and the molding temperature of the glass is greatly increased. Therefore, the content of $P_2O_5$ is confined to 0-5%, preferably 0-3%. In some implementations, when the glass strength design meets the use requirements, $P_2O_5$ is preferably to be not added.

In some implementations of the present invention, when it is necessary to enhance the refractive index and transition temperature of the glass, an appropriate amount of oxides such as $La_2O_3$, $Y_2O_3$, $Gd_2O_3$, $Nb_2O_5$ and $WO_3$ can be added. However, when the individual or combined content thereof exceeds 5%, the Young's modulus of the glass rises rapidly. Although the strength of the glass rises, the brittleness of the glass rises faster and the thermal shock resistance decreases. In addition, the devitrification resistance performance and short-wave transmittance of the glass will deteriorate. Therefore, the content of $La_2O_3$, $Y_2O_3$, $Gd_2O_3$, $Nb_2O_5$ and $WO_3$ is below 5% respectively, preferably below 3%, more preferably below 1%, further preferably 0%. Furthermore, the total content of $La_2O_3$, $Y_2O_3$, $Gd_2O_3$, $Nb_2O_5$ and $WO_3$ is preferably below 5%, more preferably below 3%, further preferably below 1%.

In some implementations of the present invention, the clarifying effect of the glass can be improved by adding one or more components of 0-1% of $Sb_2O_3$, $SnO_2$, $SnO$, $NaCl$, sulfate and $CeO_2$, preferably using $Sb_2O_3$ as a clarifying agent, preferably adding 0-0.5% of the clarifying agent.

Adding F into the glass can increase the volatilization of the glass raw material and is easy to cause environmental pollution and deterioration of the glass stripe degree, and thus F is preferred to be not contained in the glass of the present invention. Adding $Ta_2O_5$ into the glass will greatly increase the refractive index and cost of the glass and worsen the melting performance of the glass, and thus $Ta_2O_5$ is preferred to be not contained in the glass of the present invention.

<Unnecessary components>

Th, Cd, Tl, Os, Be and Se oxides have been used in a controlled manner as a harmful chemical substance in recent years, which is necessary not only in the glass manufacturing process, but also in the processing procedure and disposal after the productization for environmental protection measures. Therefore, in the case of attaching importance to the influence on the environment, it is preferably not actually included except for the inevitable incorporation. As a result, the glass does not actually contain a substance that contaminates the environment. Therefore, the glass of the present invention can be manufactured, processed, and discarded even if no measure is taken as a special environmental countermeasure.

In order to achieve environmental friendliness, $As_2O_3$ and PbO are not contained in the glass of the present invention. Although $As_2O_3$ can eliminate bubbles and better prevent glass from coloring, the addition of $As_2O_3$ will increase the platinum erosion of glass on the furnace, especially on the platinum furnace, resulting in more platinum ions entering the glass. It brings a negative impact on the service life of the platinum furnace. PbO can significantly improve the high refractive index and high dispersion performance of the glass, but both PbO and $As_2O_3$ cause environmental pollution.

The terms "not containing", "not added" and "0%" as used herein mean that the compound, molecule or element and the like are not intentionally added to the glass of the present invention as raw materials; however, as raw materials and/or equipment for the production of glass, there will be some impurities or components that are not intentionally added in small or trace amounts in the final glass, and this situation also falls within the protection scope of the present invention patent.

Hereinafter, the performance of the glass material provided by the present invention will be described.

<Refractive index and Abbe number>

The refractive index (nd) and Abbe number ($v_d$) of the glass material are measured as per the method specified in GB/T 7962.1-2010.

For the glass material of the present invention, the lower limit of refractive index (nd) is 1.48, preferably 1.50, more preferably 1.51; the upper limit of refractive index (nd) is 1.56, preferably 1.55, more preferably 1.54;

the lower limit of Abbe number ($v_d$) is 50, preferably 51, more preferably 53; the upper limit of Abbe number ($v_d$) is 58, preferably 57, more preferably 56.

<Acid resistance stability>

The acid resistance stability ($D_A$) (powder method) of the glass material is tested as per the method specified in GB/T 17129. The acid resistance stability herein is sometimes referred to as acid resistance or acid resistance stability.

The acid resistance stability ($D_A$) of the glass material provided by the present invention is above Class 2, preferably Class 1.

<Water resistance stability>

The water resistance stability ($D_W$) (powder method) of the glass material is tested as per the method specified in GB/T 17129. The water resistance stability herein is sometimes referred to as water resistance or water resistance stability.

The water resistance stability ($D_W$) of the glass material provided by the present invention is above Class 2, preferably Class 1.

[Alkali resistance stability]

The alkali resistance stability of the glass material, expressed as weight loss of glass sample, is tested in accordance with the test conditions and requirements of ISO 10629. The alkali resistance stability herein is sometimes referred to as alkali resistance or alkali resistance stability.

Process the glass into 30mm×30mm×2mm test samples, polish them on six sides, and place into 2000ml of NaOH solution. The concentration of the NaOH solution is 0.01mol/L, and the PH value is 12.0. During the test, the PH value change of the test solution is monitored by a PH meter at regular intervals, and the reaction test solution is replaced in time. After 100 hours of corrosion at 50°C, the weight loss of the sample, represented by mg, is measured by an electronic balance.

The weight loss of the glass material provided by the present invention, after the test in accordance with the above method, is less than 9mg, preferably less than 7mg, more preferably less than 5mg.

<Thermal expansion coefficient>

The thermal expansion coefficient mentioned in the present invention refers to the average expansion coefficient of the glass at 20-300°C, which is represented by $\alpha_{20\text{-}300°C}$ and tested in accordance with the method specified in GB/T7962.16-2010.

For the glass material of the present invention, the upper limit of the average thermal expansion coefficient ($\alpha_{20\text{-}300°C}$) is $90\times10^{-7}$/K, preferably $85\times10^{-7}$/K, more preferably $80\times10^{-7}$/K; the lower limit of the average thermal expansion coefficient ($\alpha_{20\text{-}300°C}$) is $60\times10^{-7}$/K, preferably $65\times10^{-7}$/K, more preferably $68\times10^{-7}$/K.

<Light transmittance>

The light transmittance mentioned in the present invention refers to the light transmittance of 10mm-thick glass sample at 360nm, which is represented by $\tau_{360nm}$ and tested in accordance with the method specified in GBAT7962.12-2010.

The internal transmittance at 360nm ($\tau_{360nm}$) of the glass material provided by the present invention is above 78%, preferably above 82%, more preferably above 85%.

<Transition temperature>

The Transition temperature ($T_g$) of the glass is tested according to the method specified in GBAT7962.16-2010.

The upper limit of transition temperature ($T_g$) of the glass provided by the present invention is 610°C, preferably 600°C, more preferably 580°C; the lower limit of the transition temperature ($T_g$) is 500°C, preferably 520°C, more preferably 530°C.

<Young's modulus>

The Young's modulus (E) of the glass is calculated according to the following formula:

$$E = \frac{4G^2 - 3GV_T^2\rho}{G - V_T^2\rho}$$

Where: $G = V_S^2\rho$

where:

> E refers to Young's modulus, Pa;
> G refers to shear modulus, Pa;

$V_T$ refers to P-wave velocity, m/s;
$V_S$ refers to S-wave velocity, m/s;
$\rho$ refers to glass density, $g/cm^3$.

For the glass material of the present invention, the lower limit of Young's modulus (E) is $6000 \times 10^7$Pa, preferably $6500 \times 10^7$Pa, more preferably $7000 \times 10^7$Pa; the upper limit of Young's modulus (E) is $8500 \times 10^7$Pa, preferably $8000 \times 10^7$Pa.

<Bubble degree>

The bubble degree of the glass material is tested as per the test method specified in GB/T7962.8-2010.
The bubble degree of the glass material provided by the present invention is above Grade A, preferably above Grade $A_0$, more preferably Grade $A_{00}$.

<Stripe degree>

The stripe degree of the glass material is measured as per the method specified in MLL-G-174B. The method is to use a stripe meter, composed of point light source and lens, to compare and check the standard sample from the direction where the stripes are most easily seen. It can be divided into 4 levels, i.e., Grades A, B, C and D. Grade A refers to that no visible stripes can be seen under the specified detection conditions, Grade B refers to that fine and scattered stripes can be seen under the specified detection conditions, Grade C refers to that slight parallel stripes can be seen under the specified detection conditions, and Grade D refers to that rough stripes can be seen under the specified detection conditions.
The stripe degree of the glass material provided by the present invention is above Grade C, preferably above Grade B.
The glass material of the present invention, with the above excellent performance, can be widely used in the packaging field of electronic devices and photosensitive devices, and can also be used in the manufacture of glass elements and various equipment or instruments, such as imaging device, sensor, microscope, medical technology, digital projection, communication, optical communication technology/information transmission, optics/lighting in the automobile field, photolithography, excimer laser, wafer, computer chip, and integrated circuit and electronic device including such circuit and chip, or camera equipment and device used in the fields of on-board product, surveillance and security.

[Manufacturing method]

The manufacturing method of the glass material provided by the present invention is as follows: The glass of the present invention is made of conventional raw materials with conventional process. Use carbonate, nitrate, sulfate, hydroxide and oxide as raw materials, mix the ingredients according to the conventional method, and then feed the mixed furnace burden into a 1300-1500°C smelting furnace for melting. Later, obtain homogeneous melted glass without bubbles and undissolved substances after clarification, stirring and homogenization, shape the molten glass in a mould and perform annealing. Those skilled in the art can appropriately select raw materials, process methods and process parameters according to actual needs.

Embodiment

The following non-limiting embodiments 1-20 are provided in order to further clearly illustrate and illustrate the technical solution of the present invention.
This embodiment obtains the glass material with the composition shown in Tables 1 to 2 by the above manufacturing method of glass material. In addition, the characteristics of each glass are measured by the test method described in the present invention, and the measurement results are shown in Tables 1 to 2.

Table 1

| Component (wt%) | 1# | 2# | 3# | 4# | 5# | 6# | 7# | 8# | 9# |
|---|---|---|---|---|---|---|---|---|---|
| $SiO_2$ | 64.1 | 63.6 | 59.9 | 53.6 | 55.8 | 63.2 | 63 | 61.8 | 50.1 |
| $B_2O_3$ | 8.2 | 8.2 | 7.5 | 13.3 | 7.8 | 8.1 | 6 | 7.9 | 9.7 |
| $Al_2O_3$ | 4.1 | 4.7 | 4.7 | 4.6 | 12 | 5.4 | 7.7 | 6.2 | 4.2 |
| $P_2O_5$ | 0 | 0 | 0 | 0 | 0 | 1.1 | 0 | 0 | 0 |
| $La_2O_3$ | 0 | 0 | 0 | 0 | 0 | 0 | 0 | 0 | 4.5 |
| $Y_2O_3$ | 0 | 0 | 0 | 0 | 0 | 0 | 0 | 0 | 0 |
| $Gd_2O_3$ | 0 | 0 | 0 | 0 | 0 | 0 | 0 | 0 | 5 |
| $TiO_2$ | 4.3 | 4.2 | 4.9 | 4.8 | 4.1 | 3.6 | 4.2 | 4.8 | 2.2 |
| $ZrO_2$ | 0 | 0 | 0 | 0 | 0 | 0 | 0 | 0 | 0.7 |
| $Nb_2O_5$ | 0 | 0 | 0 | 0 | 0 | 0 | 0 | 0 | 0 |
| $WO_3$ | 0 | 0 | 0 | 0 | 0 | 0 | 0 | 0 | 0 |
| $ZnO$ | 5.5 | 5.6 | 5.6 | 5.4 | 8.9 | 4.9 | 5.5 | 6.1 | 5.1 |
| $MgO$ | 0 | 0 | 1.8 | 0 | 0 | 0 | 0 | 0 | 0 |
| $BaO$ | 0 | 0 | 0 | 2.3 | 0 | 0 | 0 | 0 | 0 |
| $SrO$ | 0 | 0 | 0 | 0 | 0 | 0 | 0 | 0 | 0 |
| $CaO$ | 0 | 0 | 0 | 0.8 | 0 | 0 | 0 | 0 | 1.6 |
| $Li_2O$ | 0.2 | 0 | 0 | 0 | 0 | 0 | 0 | 0 | 0 |
| $Na_2O$ | 6.6 | 6.7 | 8.1 | 7.8 | 4.6 | 6.7 | 6.6 | 6.3 | 8.6 |
| $K_2O$ | 6.6 | 6.6 | 7.1 | 7 | 6.4 | 6.6 | 6.5 | 6.5 | 7.9 |
| Clarifying agent | 0.4 | 0.4 | 0.4 | 0.4 | 0.4 | 0.4 | 0.5 | 0.4 | 0.4 |
| $B_2O_3/SiO_2$ | 0.13 | 0.13 | 0.13 | 0.25 | 0.14 | 0.13 | 0.1 | 0.13 | 0.19 |
| $(B_2O_3+K_2O)/Al_2O_3$ | 3.61 | 3.15 | 3.11 | 4.41 | 1.18 | 2.72 | 1.62 | 2.32 | 4.19 |
| $(MgO+CaO+SrO+BaO)/Al_2O_3$ | 0 | 0 | 0.38 | 0.67 | 0 | 0 | 0 | 0 | 0.38 |
| $ZnO/B_2O_3$ | 0.67 | 0.68 | 0.75 | 0.41 | 1.14 | 0.6 | 0.92 | 0.77 | 0.53 |
| $MgO+CaO+SrO+BaO$ | 0 | 0 | 1.8 | 3.1 | 0 | 0 | 0 | 0 | 1.6 |

| Component (wt%) | 1# | 2# | 3# | 4# | 5# | 6# | 7# | 8# | 9# |
|---|---|---|---|---|---|---|---|---|---|
| (MgO+CaO+SrO+BaO) /ZnO | 0 | 0 | 0.32 | 0.57 | 0 | 0 | 0 | 0 | 0.31 |
| $Na_2O+K_2O$ | 13.2 | 13.3 | 15.2 | 14.8 | 11 | 13.3 | 13.1 | 12.8 | 16.5 |
| $(TiO_2+ZnO)/Al_2O_3$ | 2.39 | 2.09 | 2.23 | 2.22 | 1.08 | 1.57 | 1.26 | 1.76 | 1.74 |
| $(Na_2O+K_2O)/Al_2O_3$ | 3.22 | 2.83 | 3.23 | 3.22 | 0.92 | 2.46 | 1.7 | 2.06 | 3.93 |
| $(Na_2O+K_2O)/(B_2O_3+ZnO)$ | 0.96 | 0.96 | 1.16 | 0.79 | 0.66 | 1.02 | 1.14 | 0.91 | 1.11 |
| $(MgO+CaO+SrO+BaO)/(Na_2O+K_2O)$ | 0 | 0 | 0.12 | 0.21 | 0 | 0 | 0 | 0 | 0.1 |
| $(SiO_2+TiO_2)/(Na_2O+ZnO)$ | 5.65 | 5.51 | 4.73 | 4.42 | 4.44 | 5.76 | 5.55 | 5.37 | 3.82 |
| $\alpha_{20\text{-}300°C}(\times 10^{-7}/K)$ | 71 | 73 | 77 | 80 | 68 | 73 | 69 | 70 | 84 |
| $\tau_{360nm}(\%)$ | 86.0 | 87.2 | 87.1 | 87.5 | 87.1 | 87.4 | 87.2 | 87.5 | 87.9 |
| $T_g(°C)$ | 547 | 557 | 540 | 525 | 568 | 560 | 575 | 574 | 535 |
| $E(\times 10^7 Pa)$ | 7200 | 7220 | 7380 | 7150 | 7450 | 7250 | 7300 | 7310 | 7120 |
| $D_W$ | Category 1 | Category 1 | Category 1 | Category 1 | Category 1 | Category 1 | Category 1 | Category 1 | Category 1 |
| $D_A$ | Category 1 | Category 1 | Category 1 | Category 1 | Category 1 | Category 1 | Category 1 | Category 1 | Category 1 |
| Alkali resistance (mg) | 3.0 | 3.2 | 3.6 | 4.0 | 4.1 | 2.7 | 2.7 | 3.1 | 4.1 |
| nd | 1.52760 | 1.52679 | 1.53519 | 1.55170 | 1.53375 | 1.52028 | 1.52331 | 1.53238 | 1.54577 |
| vd | 54.28 | 54.45 | 51.90 | 52.58 | 53.64 | 56.07 | 53.96 | 52.99 | 55.03 |
| Bubble degree | $A_{00}$ | $A_{00}$ | $A_{00}$ | $A_{00}$ | $A_{00}$ | $A_{00}$ | $A_{00}$ | $A_{00}$ | $A_{00}$ |
| Stripe degree | B | B | B | C | B | B | B | B | B |

Table 2

| Component (wt%) | 10# | 11# | 12# | 13# | 14# | 15# | 16# | 17# |
|---|---|---|---|---|---|---|---|---|
| $SiO_2$ | 63.5 | 61.9 | 61.5 | 56 | 60.4 | 63.9 | 64 | 62.9 |
| $B_2O_3$ | 8.3 | 8.1 | 8.1 | 11.5 | 8.2 | 8.5 | 7.9 | 8.9 |
| $Al_2O_3$ | 4.7 | 4.6 | 3.1 | 5.4 | 4.7 | 3.1 | 5 | 3.9 |
| $P_2O_5$ | 0 | 2.2 | 0 | 0 | 0 | 0 | 0 | 0 |
| $La_2O_3$ | 0 | 0 | 0 | 0 | 0 | 0 | 0 | 0 |
| $Y_2O_3$ | 0 | 0 | 0 | 0 | 0 | 0 | 0 | 0 |
| $Gd_2O_3$ | 0 | 0 | 0 | 0 | 0 | 0 | 0 | 0 |
| $TiO_2$ | 4.2 | 4.2 | 6.1 | 4.8 | 4.3 | 4.2 | 4.5 | 3.9 |
| $ZrO_2$ | 0 | 0 | 0 | 0 | 0 | 1.9 | 0 | 0 |
| $Nb_2O_5$ | 0 | 0 | 0 | 0 | 0 | 0 | 0 | 0 |
| $WO_3$ | 0 | 0 | 0 | 0 | 0 | 0 | 0 | 0 |
| $ZnO$ | 5.6 | 5.5 | 7.4 | 6.1 | 5.6 | 4.3 | 5.9 | 5.4 |
| $MgO$ | 0 | 0 | 0 | 0 | 1.9 | 0 | 0 | 0 |
| $BaO$ | 0 | 0 | 0 | 0 | 0 | 0 | 0 | 0 |
| $SrO$ | 0 | 0 | 0 | 0 | 0 | 0 | 0 | 1.6 |
| $CaO$ | 0 | 0 | 0 | 0 | 0.9 | 0 | 0 | 0 |
| $Li_2O$ | 0 | 0 | 0 | 0 | 0 | 0 | 0.5 | 0 |
| $Na_2O$ | 6.7 | 6.6 | 6.4 | 8.7 | 6.8 | 6.4 | 6.9 | 6.4 |
| $K_2O$ | 6.6 | 6.5 | 7 | 7.1 | 6.7 | 7.3 | 4.9 | 6.6 |
| Clarifying agent | 0.4 | 0.4 | 0.4 | 0.4 | 0.5 | 0.4 | 0.4 | 0.4 |
| $B_2O_3/SiO_2$ | 0.13 | 0.13 | 0.13 | 0.21 | 0.14 | 0.13 | 0.12 | 0.14 |
| $(B_2O_3+K_2O)/Al_2O_3$ | 3.17 | 3.17 | 4.87 | 3.44 | 3.17 | 5.10 | 2.56 | 3.97 |
| $(MgO+CaO+SrO+BaO)/Al_2O_3$ | 0 | 0 | 0 | 0 | 0.60 | 0 | 0 | 0.41 |
| $ZnO/B_2O_3$ | 0.67 | 0.68 | 0.91 | 0.53 | 0.68 | 0.51 | 0.75 | 0.61 |
| $MgO+CaO+SrO+BaO$ | 0 | 0 | 0 | 0 | 2.8 | 0 | 0 | 1.6 |

(continued)

| Component (wt%) | 10# | 11# | 12# | 13# | 14# | 15# | 16# | 17# |
|---|---|---|---|---|---|---|---|---|
| (MgO+CaO+SrO+BaO) /ZnO | 0 | 0 | 0 | 0 | 0.5 | 0 | 0 | 0.3 |
| $Na_2O+K_2O$ | 13.3 | 13.1 | 13.4 | 15.8 | 13.5 | 13.7 | 11.8 | 13 |
| $(TiO_2+ZnO)/Al_2O_3$ | 2.09 | 2.11 | 4.36 | 2.02 | 2.11 | 2.74 | 2.08 | 2.39 |
| $(Na_2O+K_2O)/Al_2O_3$ | 2.83 | 2.85 | 4.32 | 2.93 | 2.87 | 4.42 | 2.36 | 3.33 |
| $(Na_2O+K_2O)/(B_2O_3+ZnO)$ | 0.96 | 0.96 | 0.86 | 0.9 | 0.98 | 1.07 | 0.86 | 0.91 |
| $(MgO+CaO+SrO+BaO)/(Na_2O+K_2O)$ | 0 | 0 | 0 | 0 | 0.21 | 0 | 0 | 0.12 |
| $(SiO_2+TiO_2)/(Na_2O+ZnO)$ | 5.5 | 5.46 | 4.9 | 4.11 | 5.22 | 6.36 | 5.35 | 5.66 |
| $\alpha_{20-300°C}(\times10^{-7}/K)$ | 73 | 73 | 67 | 79 | 75 | 74 | 71 | 72 |
| 1360run(%) | 87.2 | 86.1 | 85.1 | 88.1 | 87.1 | 87.4 | 87.2 | 86.8 |
| $T_g(°C)$ | 557 | 550 | 563 | 526 | 568 | 561 | 537 | 560 |
| $E(\times10^7 Pa)$ | 7220 | 7140 | 7340 | 7110 | 7460 | 7220 | 7250 | 7260 |
| $D_W$ | Category 1 | Category 1 | Category 1 | Category 1 | Category 1 | Category 1 | Category 1 | Category 1 |
| $D_A$ | Category 1 | Category 1 | Category 1 | Category 1 | Category 1 | Category 1 | Category 1 | Category 1 |
| Alkali resistance (mg) | 3.2 | 3.0 | 2.1 | 3.8 | 3.2 | 2.9 | 2.8 | 3.0 |
| nd | 1.52703 | 1.52504 | 1.54425 | 1.54326 | 1.53335 | 1.52894 | 1.52989 | 1.52801 |
| vd | 54.47 | 54.67 | 51.39 | 52.48 | 53.39 | 54.35 | 53.86 | 55.07 |
| Bubble degree | Aoo | Aoo | Aoo | Aoo | Aoo | Aoo | Aoo | Aoo |
| Stripe degree | B | B | B | B | C | B | B | C |

**Claims**

1.  A glass material, comprising the following components by weight percentage: 50-70% of $SiO_2$; 3-15% of $B_2O_3$; 0.5-10% of $TiO_2$; 1-12% of $ZnO$; 0.5-10% of $Al_2O_3$; 5-22% of $Na_2O+K_2O$, wherein $B_2O_3/SiO_2$ is 0.06-0.26, and $(TiO_2+ZnO)/Al_2O_3$ is 0.5-8.0.

2.  The glass material according to claim 1, further comprising the following components by weight percentage: 0-10% of $MgO+CaO+SrO+BaO$; and/or 0-5% of $Li_2O$; and/or 0-5% of $P_2O_5$; and/or 0-5% of $ZrO_2$; and/or 0-5% of $La_2O_3$; and/or 0-5% of $Y_2O_3$; and/or 0-5% of $Gd_2O_3$; and/or 0-5% of $Nb_2O_5$; and/or 0-5% of $WO_3$; and/or 0-1% of clarifying agent.

3.  A glass material, consisting of the following components by weight percentage: 50-70% of $SiO_2$; 3-15% of $B_2O_3$; 0.5-10% of $TiO_2$; 1-12% of $ZnO$; 0.5-10% of $Al_2O_3$; 5-22% of $Na_2O+K_2O$; 0-10% of $MgO+CaO+SrO+BaO$; 0-5% of $Li_2O$; 0-5% of $P_2O_5$; 0-5% of $ZrO_2$; 0-5% of $La_2O_3$; 0-5% of $Y_2O_3$; 0-5% of $Gd_2O_3$; 0-5% of $Nb_2O_5$; 0-5% of $WO_3$; 0-1% of clarifying agent, wherein $B_2O_3/SiO_2$ is 0.06-0.26, and $(TiO_2+ZnO)/Al_2O_3$ is 0.5-8.0.

4.  The glass material according to any of claims 1-3, comprising the components by weight percentage, wherein $B_2O_3/SiO_2$ is 0.08-0.2; and/or $(TiO_2+ZnO)/Al_2O_3$ is 0.7-7.0; and/or $(SiO_2+TiO_2)/(Na_2O+ZnO)$ is 3.0-12.0; and/or $ZnO/B_2O_3$ is 0.2-1.8; and/or $(Na_2O+K_2O)/Al_2O_3$ is 0.8-8.0; and/or $(Na_2O+K_2O)/(B_2O_3+ZnO)$ is 0.2-2.5; and/or $(B_2O_3+K_2O)/Al_2O_3$ is 1.0-10.0.

5.  The glass material according to any of claims 1-3, comprising the components by weight percentage, wherein $(MgO+CaO+SrO+BaO)/ZnO$ is below 1.0; and/or $(MgO+CaO+SrO+BaO)/Al_2O_3$ is below 1.0; and/or $(MgO+CaO+SrO+BaO)/(Na_2O+K_2O)$ is below 1.0.

6.  The glass material according to any of claims 1-3, comprising the following components by weight percentage: 55-68% of $SiO_2$; and/or more than 5% but less than or equal to 13% of $B_2O_3$; and/or 1.5-8% of $TiO_2$; and/or 2-10% of $ZnO$; and/or 1-8% of $Al_2O_3$; and/or 6-20% of $Na_2O+K_2O$; and/or 0-5% of $MgO+CaO+SrO+BaO$; and/or 0-3% of $Li_2O$; and/or 0-3% of $P_2O_5$; and/or 0-3% of $ZrO_2$; and/or 0-3% of $La_2O_3$; and/or 0-3% of $Y_2O_3$; and/or 0-3% of $Gd_2O_3$; and/or 0-3% of $Nb_2O_5$; and/or 0-3% of $WO_3$; and/or 0-0.5% of clarifying agent.

7.  The glass material according to any of claims 1-3, comprising the components by weight percentage, wherein $B_2O_3/SiO_2$ is 0.1-0.18; and/or $(TiO_2+ZnO)/Al_2O_3$ is 1.0-5.0; and/or $(SiO_2+TiO_2)/(Na_2O+ZnO)$ is 3.0-10.0; and/or $ZnO/B_2O_3$ is 0.3-1.0; and/or $(Na_2O+K_2O)/Al_2O_3$ is 1.0-6.0; and/or $(Na_2O+K_2O)/(B_2O_3+ZnO)$ is 0.3-2.0; and/or $(B_2O_3+K_2O)/Al_2O_3$ is 1.5-8.0.

8.  The glass material according to any of claims 1-3, comprising the components by weight percentage, wherein $(MgO+CaO+SrO+BaO)/ZnO$ is below 0.5; and/or $(MgO+CaO+SrO+BaO)/Al_2O_3$ is below 0.5; and/or $(MgO+CaO+SrO+BaO)/(Na_2O+K_2O)$ is below 0.5.

9.  The glass material according to any of claims 1-3, comprising the following components by weight percentage: 60-68% of $SiO_2$; and/or 6-12% of $B_2O_3$; and/or 2-7% of $TiO_2$; and/or 3-8% of $ZnO$; and/or 2-7% of $Al_2O_3$; and/or 8-18% of $Na_2O+K_2O$; and/or 0-1% of $La_2O_3$; and/or 0-1% of $Y_2O_3$; and/or 0-1% of $Gd_2O_3$; and/or 0-1% of $Nb_2O_5$; and/or 0-1% of $WO_3$.

10. The glass material according to any of claims 1-3, comprising the components by weight percentage, wherein $(SiO_2+TiO_2)/(Na_2O+ZnO)$ is 4.0-8.0; and/or $ZnO/B_2O_3$ is 0.4-0.8; and/or $(Na_2O+K_2O)/Al_2O_3$ is 1.5-5.0; and/or $(Na_2O+K_2O)/(B_2O_3+ZnO)$ is 0.5-1.5; and/or $(B_2O_3+K_2O)/Al_2O_3$ is 2.0-6.0.

11. The glass material according to any of claims 1-3, comprising the components by weight percentage, wherein $(MgO+CaO+SrO+BaO)/ZnO$ is below 0.2; and/or $(MgO+CaO+SrO+BaO)/Al_2O_3$ is below 0.2; and/or $(MgO+CaO+SrO+BaO)/(Na_2O+K_2O)$ is below 0.2.

12. The glass material according to any of claims 1-3, comprising the following components by weight percentage: 2-12% of $Na_2O$, preferably 3-10% of $Na_2O$, more preferably 4-9% of $Na_2O$; and/or 2-12% of $K_2O$, preferably 3-10% of $K_2O$, more preferably 4-9% of $K_2O$; and/or 0-5% of $MgO$, preferably 0-3% of $MgO$, more preferably 0-2% of $MgO$; and/or 0-5% of $CaO$, preferably 0-3% of $CaO$, more preferably 0-2% of $CaO$; and/or 0-5% of $SrO$, preferably 0-3% of $SrO$, more preferably 0-2% of $SrO$; and/or 0-5% of $BaO$, preferably 0-3% of $BaO$, more preferably 0-2% of $BaO$.

13. The glass material according to any of claims 1-3, comprising the components by weight percentage, wherein the total content of $La_2O_3$, $Y_2O_3$, $Gd_2O_3$, $Nb_2O_5$ and $WO_3$ is below 5%, preferably below 3%, more preferably below 1%.

14. The glass material according to any of claims 1-3, wherein the components thereof do not contain F; and/or do not contain $Ta_2O_5$; and/or do not contain $Li_2O$; and/or do not contain $P_2O_5$; and/or do not contain $ZrO_2$.

15. The glass material according to any of claims 1-3, wherein the refractive index of the glass material is 1.48-1.56, preferably 1.50-1.55, more preferably 1.51-1.54; and/or Abbe number is 50-58, preferably 51-57, more preferably 53-56; and/or thermal expansion coefficient $\alpha_{20-300°C}$ is $60\times10^{-7}$/K-$90\times10^{-7}$/K, preferably $65\times10^{-7}$/K-$85\times10^{-7}$/K, more preferably $68\times10^{-7}$/K-$80\times10^{-7}$/K; and/or Young's modulus is above $6000\times10^{7}$Pa, preferably $6500\times10^{7}$Pa-$8500\times10^{7}$Pa, more preferably $7000\times10^{7}$Pa-$8000\times10^{7}$Pa; and/or transition temperature is 500°C-610°C, preferably 520°C-600°C, more preferably 530°C-580°C; and/or bubble degree is above Grade A, preferably above Grade $A_0$, more preferably Grade Aoo; and/or stripe is above Grade C, preferably above Grade B.

16. The glass material according to any of claims 1-3, wherein acid resistance stability of the glass material is above Class 2, preferably Class 1; and/or water resistance stability is above Class 2, preferably Class 1; and/or for alkali resistance stability, the weight loss of glass sample is less than 9mg after the measurement in accordance with test conditions and requirements of ISO 10629, preferably less than 7mg, more preferably less than 5mg; and/or light transmittance $\tau_{360nm}$ is above 78%, preferably above 82%, more preferably above 85%.

17. Application of the glass material according to any of claims 1-16 in the field of packaging.

18. A glass element, made of the glass material according to any of claims 1-16.

19. A device, comprising the glass material according to any of claims 1-16, or comprising the glass element according to claim 18.

## INTERNATIONAL SEARCH REPORT

| | International application No. |
|---|---|
| | **PCT/CN2021/087203** |

| A. | CLASSIFICATION OF SUBJECT MATTER |
|---|---|

C03C 3/095(2006.01)i;  C03C 3/093(2006.01)i

According to International Patent Classification (IPC) or to both national classification and IPC

| B. | FIELDS SEARCHED |
|---|---|

Minimum documentation searched (classification system followed by classification symbols)

C03C

Documentation searched other than minimum documentation to the extent that such documents are included in the fields searched

Electronic data base consulted during the international search (name of data base and, where practicable, search terms used)

VEN; USTXT; CNABS; CNTXT; Web of Science; CNKI: 氧化硅, 氧化硼, 氧化钛, 氧化锌, 氧化铝, 氧化钛, 折射率, 阿贝数, SiO2, B2O3, TiO2, ZnO, Al2O3, TiO2, nd, vd, silicon oxide, boron oxide, titanium oxide, zinc oxide, aluminum oxide, titanium oxide, refractive index, Abbe number

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 111423111 A (CDGM GLASS CO., LTD.) 17 July 2020 (2020-07-17) <br> claims 1-19 | 1-19 |
| X | US 4565791 A (CORNING GLASS WORKS) 21 January 1986 (1986-01-21) <br> description column 1 lines 31-60, column 2 lines 13-18, embodiment 8 | 1-19 |
| X | CN 110228945 A (CDGM GLASS CO., LTD.) 13 September 2019 (2019-09-13) <br> description embodiment 3, claims 1-2 | 1-19 |
| A | JP 2005200296 A (NIPPON ELECTRIC GLASS CO.) 28 July 2005 (2005-07-28) <br> entire document | 1-19 |
| A | KR 20190093512 A (SCHOTT AG) 09 August 2019 (2019-08-09) <br> entire document | 1-19 |
| A | JP 2012051773 A (NIPPON ELECTRIC GLASS CO) 15 March 2012 (2012-03-15) <br> entire document | 1-19 |
| A | US 2007032367 A1 (SPRACHMANN GEROLD et al.) 08 February 2007 (2007-02-08) <br> entire document | 1-19 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 July 2021** | **14 July 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/087203**

## C.    DOCUMENTS CONSIDERED TO BE RELEVANT

| Category* | Citation of document, with indication, where appropriate, of the relevant passages | Relevant to claim No. |
|---|---|---|
| A | CN 1241543 A (SCHOTT GLAS) 19 January 2000 (2000-01-19)<br>entire document | 1-19 |

Form PCT/ISA/210 (second sheet) (January 2015)

**INTERNATIONAL SEARCH REPORT**
Information on patent family members

International application No.

**PCT/CN2021/087203**

| Patent document cited in search report | | | Publication date (day/month/year) | Patent family member(s) | | | Publication date (day/month/year) |
|---|---|---|---|---|---|---|---|
| CN | 111423111 | A | 17 July 2020 | None | | | |
| US | 4565791 | A | 21 January 1986 | EP | 0151346 | B1 | 09 March 1988 |
| | | | | JP | H0449496 | B2 | 11 August 1992 |
| | | | | ES | 538613 | D0 | 01 April 1986 |
| | | | | FR | 2558152 | A1 | 19 July 1985 |
| | | | | EP | 0151346 | A1 | 14 August 1985 |
| | | | | DE | 3469724 | D1 | 14 April 1988 |
| | | | | ES | 538613 | A0 | 01 April 1986 |
| | | | | FR | 2558152 | B1 | 27 March 1992 |
| | | | | ES | 8606213 | A1 | 01 April 1986 |
| | | | | BR | 8406643 | A | 15 October 1985 |
| | | | | JP | S60161351 | A | 23 August 1985 |
| CN | 110228945 | A | 13 September 2019 | None | | | |
| JP | 2005200296 | A | 28 July 2005 | None | | | |
| KR | 20190093512 | A | 09 August 2019 | None | | | |
| JP | 2012051773 | A | 15 March 2012 | None | | | |
| US | 2007032367 | A1 | 08 February 2007 | ES | 2332321 | T3 | 02 February 2010 |
| | | | | AT | 441623 | T | 15 September 2009 |
| | | | | WO | 2005090252 | A1 | 29 September 2005 |
| | | | | US | 7202188 | B2 | 10 April 2007 |
| | | | | JP | 2007529398 | A | 25 October 2007 |
| | | | | PT | 1725502 | E | 17 November 2009 |
| | | | | EP | 1725502 | A1 | 29 November 2006 |
| | | | | SI | 1725502 | T1 | 29 January 2010 |
| | | | | DE | 502005008045 | D1 | 15 October 2009 |
| | | | | JP | 4950876 | B2 | 13 June 2012 |
| | | | | AT | A4842004 | A | 15 May 2006 |
| | | | | AT | 414310 | B | 15 January 2007 |
| | | | | PL | 1725502 | T3 | 26 February 2010 |
| | | | | EP | 1725502 | B1 | 02 September 2009 |
| | | | | SI | EP1725502 | T1 | 29 January 2010 |
| CN | 1241543 | A | 19 January 2000 | CN | 1121987 | C | 24 September 2003 |
| | | | | JP | 4213301 | B2 | 21 January 2009 |
| | | | | JP | 2000053441 | A | 22 February 2000 |
| | | | | GB | 2338954 | A | 12 January 2000 |
| | | | | GB | 2338954 | B | 17 October 2001 |
| | | | | FR | 2780395 | B1 | 27 September 2002 |
| | | | | DE | 19828992 | C1 | 07 October 1999 |
| | | | | MY | 119592 | A | 30 June 2005 |
| | | | | FR | 2780395 | A1 | 31 December 1999 |
| | | | | GB | 9914153 | D0 | 18 August 1999 |

Form PCT/ISA/210 (patent family annex) (January 2015)

**REFERENCES CITED IN THE DESCRIPTION**

**Patent documents cited in the description**

- GB 7962 T
- GB 17129 T

- GB 796216 T